(19) **Europäisches Patentamt / European Patent Office / Office européen des brevets**

(11) **EP 1 829 032 B1**

(12) # EUROPEAN PATENT SPECIFICATION

(45) Date of publication and mention
of the grant of the patent:
**04.06.2008 Bulletin 2008/23**

(51) Int Cl.:
*G11B 7/013* (2006.01)  *G11B 7/24* (2006.01)
*G11B 7/258* (2006.01)  *G11B 7/14* (2006.01)

(21) Application number: **05826736.0**

(22) Date of filing: **07.12.2005**

(86) International application number:
**PCT/IB2005/054098**

(87) International publication number:
**WO 2006/064415 (22.06.2006 Gazette 2006/25)**

(54) **OPTICAL STORAGE MEDIUM USING A SEPARATE REFERENCE BEAM LAYER**

OPTISCHES SPEICHERMEDIUM MIT EINER SEPARATEN REFERENZSTRAHLSCHICHT

ACTION DE STOCKAGE OPTIQUE UTILISANT UNE INTERFACE A FAISCEAU DE REFERENCE SEPAREE

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.12.2004 EP 04106501**

(43) Date of publication of application:
**05.09.2007 Bulletin 2007/36**

(73) Proprietor: **Koninklijke Philips Electronics N.V.**
**5621 BA Eindhoven (NL)**

(72) Inventor: **NEIJZEN, Jacobus, H., M.**
**NL-5656 AA Eindhoven (NL)**

(74) Representative: **van Liempd, Jan et al**
**Philips**
**Intellectual Property & Standards**
**P.O. Box 220**
**5600 AE Eindhoven (NL)**

(56) References cited:
**EP-A- 0 507 304**  **EP-A- 0 633 566**
**EP-A- 0 700 037**  **WO-A-03/083848**
**US-A- 5 572 508**  **US-B1- 6 324 155**

• **COENE W M J: "Nonlinear signal-processing model for scalar diffraction in optical recording" APPLIED OPTICS, OSA, OPTICAL SOCIETY OF AMERICA, WASHINGTON, DC, US, vol. 42, no. 32, 10 November 2003 (2003-11-10), pages 6525-6535, XP002322900 ISSN: 0003-6935**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention is related to a data medium to be read out by a focused reading beam spot, and to a method for reading out a data medium by means of a focused reading beam spot.

In conventional optical Read-Only-Memory (ROM) discs information bits are represented by means of a phase structure, the pit-and-land structure. The advantage of a phase structure is an easy replication by injection molding. The required contrast difference between the bit values 1 and 0 results from an interference effect between light reflected from a first reflective interface formed by a land region and from a second reflective interface, which is formed by the pits. The second reflective interface is an optical path length of a quarter wave length away from the first reflective interface. The light reflected from the land serves as a reference beam in an interferometer of a reading device. Destructive interference of light reflected from a pit and a surrounding land region causes a decrease in reflected light intensity.

US 5,591,500 describes a data medium having a transparent substrate and an adjacent interference layer made of silicon with a refractive index of 3.5. The interference layer shares its opposite interface with an adjacent data layer. The data layer has a pit-and-land structure formed by pits and land regions, and is made from a Te alloy. The data layer is coated with a thin reflective layer of aluminum (Al), thus forming two different kinds of reflective interface sections, one defined by the pits, and the other defined by the land regions. In the propagation direction of a reading beam impinging to the transparent substrate, the land interface sections are arranged behind the pit interface sections. Fig. 2 of US 5,591,500 shows, as a result of a simulation calculation, that the reflectivity of pit sections of the pit-and-land structure increases with the thickness of the data layer, i.e., with the distance between the reflective interface sections in the propagation direction of a reading beam. Another simulation calculation shows that the phase difference between beams reflected at the pit and at the land section decreases with increasing thickness of the data layer. For these simulation calculations, the thickness of the data layer was varied between about 0 and 150 nm, while the thickness of the interference layer was fixed at 35 nm, and a wavelength of the reading beam of 680 nm was used.

The simulations show that in the data medium of US 5,591,500 interference between a fraction of a reading beam spot reflected by the land region at the back interface of the data layer and a fraction of the reading beam spot reflected by the pit region at the front interface of the data layer is crucial for obtaining a reflectivity contrast between pit and land.

The empty land regions are functional not only in creating a reference beam for the interference effect, as in US 5,591,500. Further land regions exist in the form of empty tracks between the data tracks and strongly reduce cross-talk between neighboring tracks. On the other hand, the need for land regions for creating a reference beam interface and for empty tracks results in a disadvantage of such data media: only 25 % of the available area of the data medium is used by pits. Therefore, the storage capacity of such data media is rather low.

As a way to further increase the storage capacity of an optical disc, an optical disc format has been proposed with data marks arranged in a two-dimensional pattern along a broad spiral track consisting of a number of parallel coplanar sub-tracks. The use of this so called "TwoDOS" disc format concept is expected to result in a data capacity of the order of 50 GBytes for a disc of 12 cm diameter and in a data rate of the order of 300 Mbit/s. A summary of this project was published under http://www.hitech-projects.com/euproject/twodos/index.htm.

The read-out technology for this data medium also uses the contrast caused by interference of light reflected from a land region and forming a reference beam, and of light reflected from a pit, if so. However, other than in conventional disc formats, the land regions are not arranged in the form of empty tracks between data tracks, but distributed over hexagonal unit cells consisting of a central data area, pit or land, surrounded by a narrow ring of land or pit, respectively. Still, also in this case only 25 % of the available area of the data medium is used by pits. In addition, the size of a unit cell is considerably smaller than a reading beam spot used for read-out of the disc. This disc format is therefore difficult to master with the required accuracy.

The article "Nonlinear signal-processing model for scalar diffraction optical recording" (Applied Optics, Vol.42, No.32; Wim M.J.Coene), which is considered to present the closest state of the art, describes an optical recording medium being partitioned into channel-bit cells each either having a pit or having a land without a pit, 7 channel-bits are detected by the reading beam. In order to overcome the "signal folding problem" (in that complete pit areas are not distinguishabel from complete land areas in the detector signal), the pits use only 50% of the area of the channel-bit cell.

In summary, known data media require a large fraction of empty disc area, resulting in a low data capacity. Known data media with increased data capacity tend to be difficult to master.

It is therefore an object of the present invention to provide a data medium, which is easier to master without loosing data storage capacity in comparison to known high-data capacity data media.

According to a first aspect of the invention a data medium to be read out by a focused reading beam having a predetermined wavelength is provided. The data medium has a data layer formed by a pit-and-land structure with pits formed by first reflective interface sections, and land regions formed by second reflective interface sections, wherein the distance between the first and second reflective interface sections in the propagation direction of the reading beam corresponds to an optical path length of a quarter wavelength of the reading beam or an uneven multiple thereof.

The data medium of the first aspect of the invention further comprises a reference beam interface, which, in the propagation direction of the impinging reading beam, is arranged

- either in front of the first and second reflective interface sections, and is partially reflective while the first and second interface sections are fully reflective for the reading beam,
- or behind the first and second reflective interface sections, and is fully reflective while the first and second interface sections are partially reflective for the reading beam.

In the data medium of the invention the pit-and-land structure is partitioned into channel-bit cells. The number of channel-bit cells contained in a reference area $A_{ref}$, which is defined by the square of the ratio between the reading beam wavelength WL and the numerical aperture NA of an optical system focusing the reading beam, is between 5 and 20. Furthermore, in the data medium of the invention the ratio between the sum of the areas of all pits of the pit-and-land structure and the sum of the areas of all land regions of the pit-and-land structure is between 0.4 and 0.6.

In the following, the limitations of the last paragraph will be explained in more detail, before turning to their link to other features of the data medium of the invention. After that, preferred embodiments of the data medium of the invention will be described.

The mentioned limitations define that,

a) the number of channel-bit cells contained in a reference area $A_{ref}$ defined as

$$ A_{ref} = \left( \frac{WL}{NA} \right)^2 $$

takes on a value between 5 and 20,
and
b) the ratio between the sum of the areas of all pits of the pit-and-land structure and the sum of the areas of all land regions of the pit-and-land structure is between 0.4 and 0.6.

According to limitation a), the number density of channel-bit cells per area is defined in relation to a measure of the area of the focused reading beam spot scanning the disc, which is proportional to the area of the Airy disk of the reading beam spot. It is noted that the given expression of $A_{ref}$ is not the exact value of the area of the Airy disk, but proportional to it. Both parameters entering into the expression for the reference area $A_{ref}$, WL and NA, have defined values in known standards for optical storage and read-out technology. According to the BluRay ROM disc specifications, the reading beam wavelength is 405 nm and the numerical aperture NA is 0.85. For comparison with limitation a) of the data medium of the present invention, in a 25 GB BluRay disc the number of channel-bit cells per $A_{ref}$ is 9. For a 50GB TwoDOS disc the number of channel-bit cells per $A_{ref}$ is 13.4, neglecting a correction for a guard band.

A high-density data medium according to the invention is can be adapted to a value of $A_{ref}$, which is smaller than in the mentioned prior art specifications. A reduced value of the reference area corresponds to a value of the NA, which is increased over those used in prior-art standards. It is noted that the reference area can also be reduced by decreasing the wavelength WL in comparison to prior-art solutions. This, however, depends on the availability of semiconductor laser sources emitting at a desired wavelength. The data medium of the invention is adapted to that smaller reference area by a channel-bit cell size decreased in proportion to the decrease of $A_{ref}$, thus keeping the number of channel bits per reference area $A_{ref}$ constant. For instance, the data medium of the invention can be adapted to a read-out technology employing an increased NA value of 2, as compared to 0.85, which is the standard NA value for the BluRay disc. In this case, the data medium of the invention has channel-bit cells smaller than that of the BluRay disc. The number of channel-bit cells per reference area $A_{ref}$, however, will be the same as in the BluRay disc. In this case, the data medium of the invention has an absolute density of channel-bit cells, which is higher than in the BluRay disc.

Mastering problems due to smaller extensions of the channel-bit cells and, thus, the pits, are avoided by limitation b), as will be explained next. The combination of limitations a) and b) is a crucial feature of the data medium of the invention.

According to limitation b), the ratio between the sum of the areas of all pits of the pit-and-land structure and the sum of the areas of all land regions of the pit-and-land structure of the data medium of the invention is between 0.4 and 0.6. That means, the pit-and-land structure of the data medium of the invention has a significantly larger fraction of pit area than known data media, for which the corresponding pit area fraction is about 0.25, as was explained above.

Thus, the data medium of the present invention combines a particularly high channel-bit density with a large total pit area fraction, allowing to either drive the data capacity to an upper limit or increase the pit size to make mastering easier and more economic, or to choose a combination of intermediate values of both parameters, optimized according to given constraints of data capacity and smallest technologically possible pit size. The increased total pit area can be used to make individual pits extending over the full area of a channel-bit cell or even into the neighboring channel-bit cell, thus making the pits easier to master, while the number of channel-bit cells per reference area is not or only slightly increased over known data media.

The limitations a) and b) are linked to the new concept of a separated reference beam interface. In the data medium of the invention, land regions no longer serve to provide a reference beam. The function of the land regions is reduced to the representation of a bit value, either 0 or 1. The creation of a reference beam is instead transferred to an additional reference beam interface separate from the first and second interface sections of the pit-and land-structure. This is expressed in a reduction of the fraction of the total land area in the total area of the pit-and-land structure of the data layer.

The bit values stored in the data medium are thus detected as high and low intensity values of a signal beam created by the superposition of light reflected from the reference beam interface and light reflected from the pit-and-land structure formed by the first and second interface sections. The change in intensity is caused by an interference effect. A detected low intensity value in a read-out detector is indicative of destructive interference between the reference beam reflected from the reference beam interface and the signal beam reflected from the pit-and-land structure. A high intensity value corresponds to a constructive interference.

For destructive interference, the optical path difference between the reference beam interface and the closest of the first and second interface sections is a quarter of the wavelength of the reading beam, or an uneven multiple thereof. Since this additional path is taken by the beam when impinging onto the data layer and after reflection from the data layer, the full optical path difference between the signal beam and the reference beam amounts to half a wavelength or an uneven multiple thereof, respectively.

For a constructive interference effect, the optical path difference between the reference beam interface and the other of the first and second interface sections is half a wavelength of the reading beam or an integer multiple thereof. The full optical path difference between the reflected beam and the reference beam is one wavelength or an integer multiple thereof, respectively. As will be clear to those skilled in the art, in calculating the effective optical path differences in such interference situations the effective (mean) angle of incidence in the data medium has to be taken into account.

It is left to the special design of a data medium to define which of the first and second interface sections shall be called pits and which shall be called the land sections. The two alternative options are equivalent in view of the present invention.

The data medium of the invention has three interface levels with well defined reflective properties. It should be noted that the reference beam interface and the first and second interface sections of the pit-and-land structure of the data medium need not be ideal in the sense that they have literally no extension in the propagation direction of the reading beam. Within the scope of the present invention the term interface also comprises a thin coating of typically 15 nm thickness. A coating thickness is considerably thinner than the thickness of a dielectric layer. A typical dielectric layer thickness is in the range of 60nm.

There are two alternative arrangements of the reference beam interface. The reference beam interface can be arranged in front of the pit-and-land structure or behind the pit-and-land structure. The designations "in front of" and "behind" are given with reference to the propagation direction of the impinging reading beam.

a) Reference beam interface in front of the data layer

In a data medium with the reference interface in front of the first and second reflective interface sections of the data layer, the reference beam interface is partially reflective while the first and second interface sections are fully reflective for the reading beam. The reading beam thus first hits the reference beam interface. Only a part of the impinging reading beam is reflected by the reference beam interface while the remaining part is transmitted and is reflected by either the first or the second interface of the pit-and-land structure and again transmitted through the reference beam interface (in opposite direction) to superpose the reference beam. Both, the first and second interfaces are fully reflective in this case.

b) Reference beam interface behind the data layer

In a data medium with the reference beam interface behind the first and second reflective interface sections, the reference beam interface is fully reflective while the first and second interface sections are partially reflective for the reading beam. The fraction of light transmitted through the partially reflective interfaces is high enough to allow the detection of an interference effect creating a signal contrast between pit and land.

The new concept of a reference beam interface, which is separated from the pit-and-land structure, is combined in the data medium of the invention with a particularly high density of channel-bit cells and at the same time a fraction of pit area in the pit-and-land structure of the data layer, which is significantly larger than in previously known data media.

Next, preferred embodiments of the data medium of the invention will be described. The additional features of the preferred embodiments can be combined with each other to form further embodiments, unless otherwise stated.

In an embodiment of the data medium of the invention the number of channel-bit cells contained in the reference area $A_{ref}$ has a value in the interval between 8 and 20. A preferred interval between 8 and 14 corresponds to that covered by known high-density disc standards. In one particular embodiment this figure of merit has a value of 9, corresponding to that of the BluRay disc. In another particular embodiment this figure of merit has a value of about 13.4, corresponding to the value of the TwoDOS disc without correction for a guard band..

In a further embodiment the number of channel-bit cells contained in the reference area $A_{ref}$ is between 10 and 20. In a further embodiment providing a particularly high data capacity the number of channel-bit cells contained in the reference area $A_{ref}$ is larger than 14.

In a further embodiment the reference beam interface is partially reflective and formed by an interface between a first layer and a second layer. The first layer is arranged in front of the second layer and has a higher or lower refractive index than the second layer. This embodiment makes use of a partial reflection of the reading beam at an interface forming a step in the refractive index.

In another embodiment forming an alternative to the embodiment last described the reference beam interface is formed by a coating layer. The coating layer is for instance a thin aluminum coating. A typical coating thickness is 10 to 20 nm, for instance 15 nm. In contrast, dielectric layers have a thickness of typically 60 nm.

As mentioned before, there are two alternatives of arranging pit and land regions with respect to each other. In one embodiment the pit regions of the pit-and-land structure are arranged behind land regions. As an alternative, pit regions of the pit-and-land structure are arranged in front of the land regions.

In a preferred embodiment the channel-bit cells have the shape of a hexagon and are arranged in a two-dimensional hexagonal lattice. This format of the data layer corresponds to that of the TwoDOS disc described above. However, the present embodiment enhances the format of the data layer of a TwoDOS disc. The total pit area is increased over the known TwoDOS format, which corresponds to an increased individual pit area. This facilitates the mastering of a disc with this data format.

In another embodiment the channel-bit cells line up along at least one circular or spiral track. This embodiment is based on a one-dimensional data arrangement known from the Compact Disc (CD), Digital Versatile Disc (DVD) or BluRay Disc (BD).

A further embodiment of the data medium of the invention is adapted to be read out by a focused laser reading beam having a wavelength between 380 and 410 nm. A preferred embodiment is adapted to be read out by a focused laser reading beam with a wavelength of 405 to 410 nm.

The data medium of the present invention preferably takes the form of a disc.

In a further embodiment the area of a pit takes between 80 and 90 % of the area of the channel-bit cell. In this embodiment, the remaining area is used for radial tracking of the reading beam. In another embodiment, the area of a pit takes the full area of the channel-bit cell. In this embodiment, radial tracking is performed on the basis of channel-bit cells forming land areas. In a further embodiment, the area of a pit is larger than the area of a channel-bit cell, such that two pits of neighboring channel-bit cells overlap. The overlap is chosen small enough for the two pit to be resolvable by the read-out system.

According to a second aspect of the invention a method for reading data from a data medium is provided, comprising the steps of

- Generating a reading beam having a predetermined wavelength,
- Providing a data medium according to the first aspect of the invention or one of its embodiments,
- Focusing the reading beam onto the data medium by means of an optical system having a predetermined numerical aperture to form at least one reading beam spot, wherein the number of channel-bit cells contained in a reference area $A_{ref}$ defined by the square of the ratio between the reading beam wavelength WL and the numerical aperture NA of an optical system focusing the reading beam:

$$A_{ref} = \left( \frac{WL}{NA} \right)^2$$

is between 5 and 20,

- Guiding the reading beam spot along channel-bit cells of the data medium and detecting, as a function of time, an intensity of a signal beam formed by a superposition of a primary beam reflected from the channel-bit cell currently irradiated by the reading beam spot and of a reference beam formed by reflection of the reading beam from the reference beam interface.

The advantages of the method of the second aspect of the invention correspond to those explained in the context of the data medium of the first aspect of the invention. According to an embodiment of the method of the invention the reading beam wavelength is between 380 and 410 nm, preferably between 405 and 410 nm. The numerical aperture preferably amounts to a value between 0.8 and 2.

Further embodiments of the data medium of the invention will be described in the following with reference to the figures.

Fig. 1 shows a schematic cross-sectional view of a first embodiment of a data medium according to the invention.

Fig. 2 shows a schematic cross-sectional view of a second embodiment of a data medium according to the invention.

Fig. 3 shows a schematic top view of a data medium according to the prior art.

Fig. 4 shows a schematic top view of a third embodiment of a data medium according to the invention for comparison with the prior-art data medium of Fig. 3.

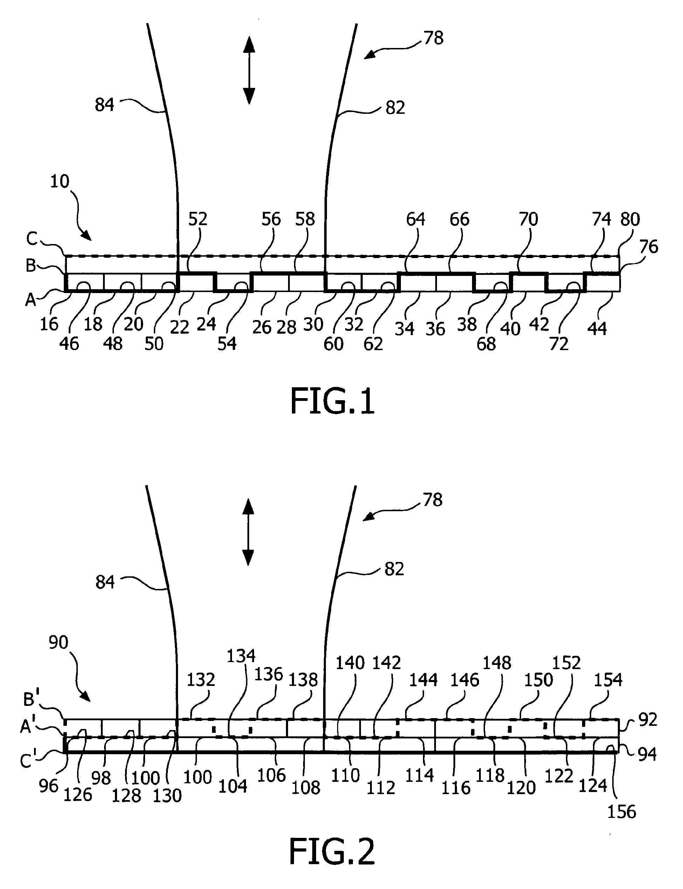

Fig. 1 shows a schematic cross section view of a first embodiment of the invention, which is formed by a data medium 10. Data medium 10 has a data layer 12 and a reference layer 14 deposited on top of the data layer 12.

For purposes of illustration only, data layer 12 is shown to be divided into channel-bit cells 16 to 44. In reality, of course, no division between channel-bit cells exists in data layer 12. The concept of the channel-bit cell merely serves to describe the arrangement of pit and land sections in the data layer 12, along a track or in a two-dimensional pattern.

The data layer 12 has a pit-and-land structure. Channel-bit cells 16, 18, 20, 24, 30, 32, 38, and 42 have pits 46, 48, 50, 54, 60, 62, 68, and 72, respectively, while channel-bit cells 22, 26, 28, 34, 36, 40, and 44 consist of land sections 52, 56, 58, 64, 66, 70, and 74, respectively with no pits. The pit and land sections are covered by a thin fully reflective metallic coating 76, indicated by a fat full line in Fig. 1.

Pit and land sections of data layer 12 define two different levels A and B of first and second reflective interface sections. Level A corresponds to the bottom of the pits 46, 48, 50, 54, 60, 62, 68, and 72. Level B corresponds to the land sections 52, 56, 58, 64, 66, 70, and 74. The distance between the two levels A and B of the pit and land sections corresponds to the thickness of data layer 12 and amounts to a quarter wavelength of a reading beam 78. Of course, the thickness of data layer 12 is adapted to the wavelength and averaged angle of the reading beam inside the data medium 10. The side walls of the pits can be made vertical or nearly vertical so that their contribution to the reflected intensity is negligibly low.

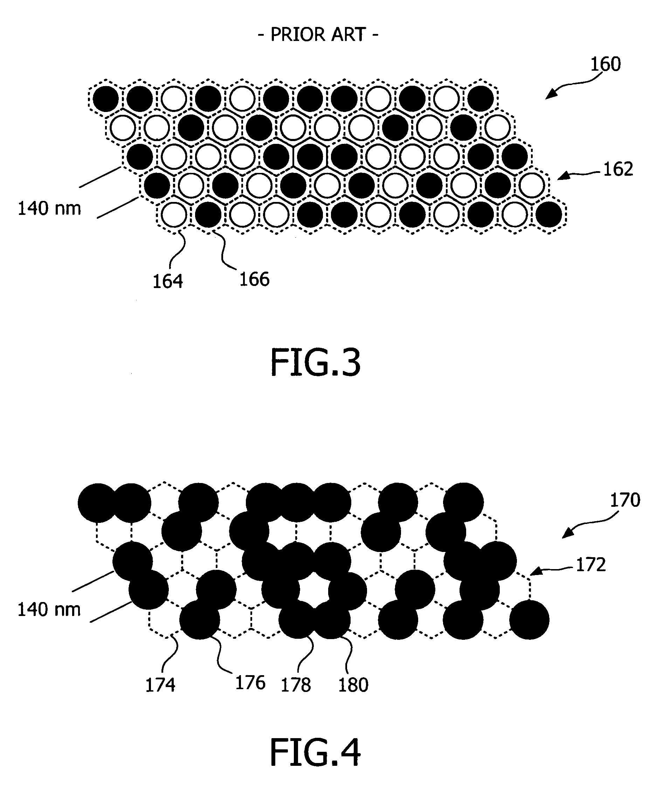

As can be clearly seen in Fig. 1, the pit sections forming level A extend over the complete length of the respective channel-bit cells. The same holds in a direction perpendicular to the plane of the paper. A definition of the area of a channel-bit cell for data media having one-dimensional arrangements of pits in data tracks with a given track pitch is the product of the channel-bit length and the track pitch. For instance, in a 25 Gigabyte BluRay disc the track pitch is 320nm and the channel-bit length is 74.5nm, resulting in a channel-bit cell area of roughly $0.024 \ \mu m^2$. Assuming an adoption of these parameters for the present embodiment, most of this area is used for a pit in the data medium 10. The area used for the pit is chosen such that the remaining land area of the channel-bit cell is large enough to support radial tracking of the reading beam. The case of a two-dimensional arrangement of pits will be described below with reference to Figs. 3 and 4.

In contrast, prior art data media have pit sections which extend over at most 50 % of the area of a channel-bit cell. The advantage of the data medium of Fig. 1 over these prior art data media is that it is easier to master due to the larger size of the pits in relation to the channel-bit cells. On the other hand, the data medium of the invention can also be used to decrease the size of the channel-bit cells and thus increase the data capacity, if mastering is not a limiting factor and if the reading beam spot is small enough to read the higher density.

Reference layer 14 is arranged in front of data layer 12, sharing a common interface. Reference layer 14 has a partially reflective coating 80 applied at an interface opposite to that shared with data layer 12, thus defining a reference beam interface at a level C. The fact that the coating is partially reflective is indicated by a dotted line in Fig. 1 at a level C. The reference beam interface is formed at a distance of a quarter wavelength from level B, which is achieved by giving layer 14 an appropriate thickness during production of the data medium.

The reference beam interface can also be formed by a step in the refractive index. To obtain partial reflection, reference layer 14 must have a refractive index, which is lower or higher than that of a layer (not shown in Fig. 1) in front of reference layer 14 and traversed by the impinging reading beam 78 before hitting the reference beam interface 80.

The reading beam 78 is indicated by two lines 82 and 84. The width of the reading beam in data layer 12, which is shown in Fig. 1 by the distance between lines 82 and 84, is roughly drawn to be in scale with the square root of the size of a reference area $A_{ref}$,

$$A_{ref} = \left( \frac{WL}{NA} \right)^2$$

which is arbitrarily assumed to cover 16 channel-bit cells of the data medium 10 of Fig 1. WL denotes the wavelength of the reading beam, and NA is the numerical aperture of the optical system focusing the reading beam. As can be seen from the cross sectional view Fig. 1, the reading beam spot covers 4 channel-bit cells in the direction shown, namely, the cells 22 to 28. It is noted that while the reading beam covers 16 channel-bit cells all together, the major fraction of the reflected intensity is from channel-bit cells hit by the center of the reading beam 78, thus enabling a read-out system to resolve the bit values of individual channel-bit cells.

During the read-out process, the reading beam 78 is partially reflected at the reference beam interface 80. The transmitted fraction of the reading beam is fully reflected by the pit-and-land structure of the data layer 12. The portion of the reading beam, which is reflected by the pit-and-land structure of data layer 12 travels back through reference layer 14 and reference beam interface 80 to superpose the reflected reference beam. It is the light intensity resulting from superposition of the reflected reference beam and the signal beam reflected from the pit-and-land structure, which is detected by the read-out device and processed. Of course, the superposition can only be detected if a reading beam having sufficient coherence is used, as provided by laser diodes known in the art.

By guiding the reading beam 78 over the data medium 10 the total intensity of the reflected reading beam varies in accordance with the pit-and-land structure of the data layer 12. Destructive interference occurs between the reference beam and the reading beam fraction reflected at land sections, such as the land sections 52, 56, 58, resulting in a low intensity value. Constructive interference of the reference beam and the transmitted fraction of the reading beam, which is reflected in the pit sections, such as the pits 54, 60, and 62 of channel-bit cells 24, 30, and 32, giving rise to a high intensity value of the total detected intensity.

Fig. 2 shows an alternative embodiment of a data medium of the invention. The data medium 90 of Fig. 2 has a data layer 92 arranged in front of a reference layer 94. For simplicity, the pit-and-land structure of data layer 92 shown corresponds to that of data layer 12 of Fig. 1. In contrast, however, the data layer 92 is covered by a partially reflective coating 96 transmitting a well defined fraction of an impinging reading beam. Therefore, the back interface sections of the data layer 92, which are formed by the partially reflective coating 96 at the bottom of pit sections 126, 128, 130, 134, 140, 142, 148, 152 form first interface sections at level A'. The front interface sections of data layer 92, formed by the partially reflective coating at the land sections 132, 136 to 140, 144, 146, 150, and 154 form second interface sections at level B', at a distance of a quarter wavelength to level A' in the propagation direction of the impinging reading beam. Both first and second interface sections partially reflect the impinging reading beam back to a detector of the read-out-system while transmitting the remaining part. Note that unwanted absorption at the interfaces and in the layers traversed by the reading beam can be made negligible by proper material choice, as is well known in the art.

Reference layer 94 is arranged behind data layer 92 in the present embodiment. It has a fully reflective back interface 156 forming the reference beam interface of data medium 90 at level C'. The reference beam interface is arranged with a distance of a quarter wavelength to the partially reflective interface sections of the pits, and with a distance of half a wavelength to the partially reflective interface sections forming the land sections.

Regarding the size of the reading beam and the geometry of the pit-and-land structure in relation to the reading beam, reference is made to the corresponding description of Fig. 1. Therefore, the same reference numerals are used in the present embodiment for the reading beam.

During the read-out process, the reading beam 78 is partially reflected at the pit-and-land structure of the data layer 92, thus forming a signal beam. The transmitted fraction of the reading beam is fully reflected by reference beam interface 156 of reference layer 94. The fraction of the intensity of the reading beam, which is reflected by the reference beam interface 156, travels back through reference layer 94 and the partially reflective coating and, in the land sections, through data layer 92, to finally superpose the signal beam. It is the total light intensity resulting from the superposition of the reflected reference beam and the signal beam reflected from the pit-and-land structure, which is detected by the read-out device and processed to recover the information stored in the data medium.

It is noted that the cross sectional views shown in Figs. 1 and 2 are the same in either a one-dimensional arrangement of channel-bit cells, that is, in an arrangement of channel-bit cells along a spiral or circular data track, or in a two-dimensional arrangement of channel-bit cells. While the former is widely known from the CD, DVD, and BD, the latter is rather new. An example for a two-dimensional arrangement of channel-bit cells is the TwoDOS format, which will be explained in the following with reference to Fig. 3. Fig. 4 shows an embodiment of the invention improving this format.

Fig. 3 shows a schematic top view of a TwoDOS data medium 160 according to the prior art. Data medium 160 has a data layer 162, which has a pit-and-land structure that can be partitioned into hexagonal cells, wherein each unit cell corresponds to a channel-bit cell. The hexagonal cells are accentuated in Fig. 3 by dashed lines. Again, the cell structure is shown in Fig. 3 to provide a guide to the eye.

By way of example, two channel-bit cells 164 and 166 will be described in more detail. The hexagon representing channel-bit cell 164 has a centered open circle. This symbol indicates that channel-bit cell 164 consists of a land region only, and does not contain a pit. In contrast, the hexagon representing channel-bit cell 166 has a centered full circle, indicating that channel-bit cell 166 has a pit surrounded by a small land region extending to the border of the hexagonal cell. The pit size is between 90 and 100 nm, and the distance between two adjacent pits is 140 nm, as indicated on the left side of Fig. 3. The resulting channel-bit cell area, i.e., the area of a hexagonal cell is 0.017 $\mu m^2$.

Fig. 4 shows a schematic top view of a data medium 170, forming a third embodiment of the invention. For allowing a comparison with the prior-art data medium of Fig. 3, data layer 172 of data medium 170 has the same arrangement of pit and land regions as data layer 162 of the data medium 160 of Fig. 3. Again, indicating the arrangement of pit and land regions in hexagonal cells is accentuated by dashed lines. It is noted that the distance between the center points of neighboring hexagonal cells is the same in the present embodiment as in the prior-art data medium of Fig. 3. A reference beam interface is present, but cannot be shown in the top view of Fig. 4. Both configurations shown in Fig. 1 and 2 can be used in combination with the embodiment of Fig. 4.

Two channel bit cells 174 and 176 in positions corresponding to that of channel-bit cells 164 and 166 of data medium 160 will be described in more detail. Channel-bit cell 174 forms a land region. In contrast, channel-bit cell 176 has a circular pit extending over the complete channel-bit cell and even into the neighboring channel-bit cells.

The example of pits 178 and 180 shows how in the data medium of this embodiment neighboring pits overlap while still being recognizable as circular pits. However, as is clear from Fig. 4, there is no sidewall separating the neighboring pits from each other in the overlap region of pits 178 and 180.

The pit-and-land structure of data layer 172 clearly shows an increased total pit area fraction over the prior-art medium 160 of Fig. 3. The total pit area takes about 50 % of the total area of the pit-and-land structure of data layer 172.

**Claims**

1.  A data medium (10, 90, 170) to be read out by a focused reading beam (78) having a predetermined wavelength, the data medium comprising a data layer (12, 92) formed by a pit-and-land structure with pits (46, 48, 50, 54, 60, 62, 68, 72; 126, 128, 130, 134, 140, 142, 148, 152; 176, 178, 180) formed by first reflective interface sections (A, A'), and land regions (52, 56, 58, 64, 66, 70, 74, 132, 136 to 140, 144, 146, 150, 154; 174) formed by second reflective interface sections (B, B'), wherein the distance between the first and second reflective interface sections in the propagation direction of the reading beam corresponds to an optical path length of a quarter wavelength of the reading beam or an uneven multiple thereof, and a reference beam interface (C, C'), which, in the propagation direction of the impinging reading beam, is arranged

    - either in front of the first (A) and second (B) reflective interface sections, and is partially reflective while the first and second interface sections are fully reflective for the reading beam,
    - or behind the first (A') and second (B') reflective interface sections, and is fully reflective while the first and second interface sections are partially reflective for the reading beam,

    wherein the pit-and-land structure is partitioned into channel-bit cells (16 to 44; 96 to 124; 174 to 180), each either having one pit or having a land region without a pit, wherein the number of channel-bit cells contained in a reference area $A_{ref}$ defined by the square of the ratio between the reading beam wavelength WL and the numerical aperture NA of an optical system focusing the reading beam,

$$A_{ref} = \left( \frac{WL}{NA} \right)^2$$

is between 5 and 20, and wherein the ratio between the sum of the areas of all first interface sections and the sum of the areas of all second interface sections of the pit-and-land structure is between 0.4 and 0.6.

2.  The data medium of claim 1, wherein the number of channel-bit cells contained in the reference area $A_{ref}$ is between 8 and 20.

3.  The data medium of claim 1, wherein the number of channel-bit cells contained in the reference area $A_{ref}$ is between 14 and 20.

4.  The data medium of claim 1, wherein the reference beam interface (C) is partially reflective and formed by an interface between a first layer and a second layer, and wherein the first layer, as seen from a reading beam source, is arranged in front of the second layer and has a higher or lower refractive index than the second layer.

5.  The data medium of claim 1 or 4, wherein the reference beam interface is formed by a coating layer (80).

6.  The data medium of claim 1, wherein the first reflective interface sections forming the pits (46, 48, 50, 54, 60, 62, 68, 72; 126, 128, 130, 134, 140, 142, 148, 152; 176, 178, 180) of the pit-and-land structure, as seen from a reading beam source, are arranged behind the second reflective interface sections forming the land regions (52, 56, 58, 64, 66, 70, 74, 132, 136 to 140, 144, 146, 150, 154; 174).

7.  The data medium of claim 1, wherein the first reflective interface sections forming the pits of the pit-and-land structure, as seen from a reading beam source, are arranged in front of the second reflective interface sections forming the land regions.

8.  The data medium of claim 1, wherein the channel-bit cells (174 to 180) have the shape of a hexagon and are arranged in a two-dimensional hexagonal lattice (172).

9.  The data medium of claim 1, wherein the channel-bit cells line up along at least one circular or spiral track.

10. The data medium of claim 1, which is adapted to be read out by a focused reading beam (78) having a wavelength between 380 and 410 nm.

11. A method for reading data from a data medium, comprising the steps of

- Providing a data medium (10, 90, 170) according to one of the preceding claims,
- Generating a reading beam (78) having a predetermined wavelength,
- Focusing the reading beam onto the data medium by means of an optical system having a numerical aperture NA to form at least one reading beam spot, wherein the wavelength and the numerical aperture are chosen such that the number of channel-bit cells of the data medium contained in a reference area $A_{ref}$ defined by the square of the ratio between the reading beam wavelength WL and the numerical aperture NA,

$$A_{ref} = \left(\frac{WL}{NA}\right)^2$$

is between 5 and 20,
- Guiding the reading beam spot along channel-bit cells of the data medium and detecting, as a function of time, an intensity of a signal beam formed by a superposition of a primary beam reflected from the channel-bit cell currently irradiated by the reading beam spot and of a reference beam formed by reflection of the reading beam from the reference beam interface.

12. The method of claim 11, wherein the reading beam (78) has a wavelength between 380 and 410 nm.

13. The method of claim 11, wherein the numerical aperture has a value between 0.8 and 2.

**Patentansprüche**

1. Von einem fokussierten Lesestrahlenbündel (78), das eine zuvor bestimmte Wellenlänge hat, auszulesendes Datenmedium (10, 90, 170), wobei das Datenmedium Folgendes umfasst:

eine durch eine Pit-und-Land-Struktur gebildete Datenschicht (12, 92) mit durch erste reflektierende Grenzflächenabschnitte (A, A') gebildeten Pits (46, 48, 50, 54, 60, 62, 68, 72; 126, 128, 130, 134, 140, 142, 148, 152; 176, 178, 180) und durch zweite reflektierende Grenzflächenabschnitte (B, B') gebildeten Land-Bereichen (52, 56, 58, 64, 66, 70, 74, 132, 136 bis 140, 144, 146, 150, 154; 174), wobei der Abstand zwischen den ersten und zweiten reflektierenden Grenzflächenabschnitten in der Fortpflanzungsrichtung des Lesestrahlenbündels einer optischen Weglänge von einer Viertelwellenlänge des Lesestrahlenbündels oder einem ungeraden Vielfachen davon entspricht, und eine Bezugsstrahlenbündel-Grenzfläche (C, C'), die in der Fortpflanzungsrichtung des einfallenden Lesestrahlenbündels

- entweder vor den ersten (A) und zweiten (B) reflektierenden Grenzflächenabschnitten angeordnet ist und teilreflektierend ist, während die ersten und zweiten Grenzflächenabschnitte für das Lesestrahlenbündel vollreflektierend sind,
- oder hinter den ersten (A') und zweiten (B') reflektierenden Grenzflächenabschnitten angeordnet ist und vollreflektierend ist, während die ersten und zweiten Grenzflächenabschnitte für das Lesestrahlenbündel teilreflektierend sind,

wobei die Pit-und-Land-Struktur in Kanal-Bitzellen (16 bis 44; 96 bis 124; 174 bis 180) aufgeteilt ist, die jeweils entweder ein Pit oder einen Land-Bereich ohne ein Pit aufweisen,
wobei die Anzahl Kanal-Bitzellen, die in einer durch das Quadrat des Verhältnisses zwischen der Lesestrahlenbündel-Wellenlänge WL und der numerischen Apertur NA eines das Lesestrahlenbündel fokussierenden optischen Systems definierten Bezugsfläche $A_{ref}$

$$A_{ref} = \left(\frac{WL}{NA}\right)^2$$

enthalten sind, zwischen 5 und 20 liegt,
und wobei das Verhältnis zwischen der Summe der Flächen aller ersten Grenzflächenabschnitte und der Summe der Flächen aller zweiten Grenzflächenabschnitte der Pit-und-Land-Struktur zwischen 0,4 und 0,6 liegt.

2. Datenmedium nach Anspruch 1, wobei die Anzahl von in der Bezugsfläche $A_{ref}$ enthaltenen Kanal-Bitzellen zwischen 8 und 20 liegt.

3. Datenmedium nach Anspruch 1, wobei die Anzahl von in der Bezugsfläche $A_{ref}$ enthaltenen Kanal-Bitzellen zwischen 14 und 20 liegt.

4. Datenmedium nach Anspruch 1, wobei die Bezugsstrahlenbündel-Grenzfläche (C) teilreflektierend ist und von einer Grenzfläche zwischen einer ersten Schicht und einer zweiten Schicht gebildet wird, und wobei die erste Schicht, von einer Lesestrahlenbündelquelle aus gesehen, vor der zweiten Schicht angeordnet ist und eine größere oder kleinere Brechzahl als die zweite Schicht hat.

**5.** Datenmedium nach Anspruch 1 oder 4, wobei die Bezugsstrahlenbündel-Grenzfläche von einer Überzugsschicht (80) gebildet wird.

**6.** Datenmedium nach Anspruch 1, wobei die ersten reflektierenden Grenzflächenabschnitte, die die Pits (46, 48, 50, 54, 60, 62, 68, 72; 126, 128, 130, 134, 140, 142, 148, 152; 176, 178, 180) der Pit-und-Land-Struktur bilden, von einer Lesestrahlenbündelquelle aus gesehen, hinter den zweiten reflektierenden Grenzflächenabschnitten angeordnet sind, die die Land-Bereiche (52, 56, 58, 64, 66, 70, 74, 132, 136 bis 140, 144, 146, 150, 154; 174) bilden.

**7.** Datenmedium nach Anspruch 1, wobei die ersten reflektierenden Grenzflächenabschnitte, die die Pits der Pit-und-Land-Struktur bilden, von einer Lesestrahlenbündelquelle aus gesehen, vor den zweiten reflektierenden Grenzflächenabschnitten angeordnet sind, die die Land-Bereiche bilden.

**8.** Datenmedium nach Anspruch 1, wobei die Kanal-Bitzellen (174 bis 180) die Form eines Hexagons haben und in einem zweidimensionalen hexagonalen Gitter (172) angeordnet sind.

**9.** Datenmedium nach Anspruch 1, wobei die Kanal-Bitzellen entlang zumindest einer kreisförmigen oder spiralförmigen Spur eine Reihe bilden.

**10.** Datenmedium nach Anspruch 1, das angepasst ist, durch ein fokussiertes Lesestrahlenbündel (78) ausgelesen zu werden, das eine Wellenlänge zwischen 380 und 410 nm hat.

**11.** Verfahren zum Lesen von Daten aus einem Datenmedium, mit den folgenden Schritten

- Bereitstellen eines Datenmediums (10, 90, 170) nach einem der vorhergehenden Ansprüche,
- Erzeugen eines Lesestrahlenbündels (78) mit einer zuvor bestimmten Wellenlänge,
- Fokussieren des Lesestrahlenbündels auf das Datenmedium mit Hilfe eines optischen Systems, das eine numerische Apertur NA hat, um zumindest einen Lesestrahlenbündelfleck zu bilden, wobei die Wellenlänge und die numerische Apertur so gewählt werden, dass die Anzahl Kanal-Bitzellen des Datenmediums, die in einer durch das Quadrat des Verhältnisses zwischen der Lesestrahlenbündel-Wellenlänge WL und der numerischen Apertur NA definierten Bezugsfläche $A_{ref}$

$$A_{ref} = \left( \frac{WL}{NA} \right)^2$$

enthalten sind, zwischen 5 und 20 liegt,
- Führen des Lesestrahlenbündelflecks entlang Kanal-Bitzellen des Datenmediums und Detektieren, als Funktion der Zeit, einer Intensität eines Signalstrahlenbündels, das durch eine Überlagerung eines an der von dem Lesestrahlenbündelfleck momentan bestrahlten Kanal-Bitzelle reflektierten Primärstrahlenbündels und eines durch Reflexion des Lesestrahlenbündels an der Bezugsstrahlenbündel-Grenzfläche gebildeten Bezugsstrahlenbündels gebildet wird.

**12.** Verfahren nach Anspruch 11, wobei das Lesestrahlenbündel (78) eine Wellenlänge zwischen 380 und 410 nm hat.

**13.** Verfahren nach Anspruch 11, wobei die numerische Apertur einen Wert zwischen 0,8 und 2 hat.

**Revendications**

**1.** Support de données (10, 90, 170) destiné à être lu par un faisceau de lecture focalisé (78) ayant une longueur d'onde prédéterminée, le support de données comprenant :

une couche de données (12, 92) formée par une structure en créneaux avec des cratères (46, 48, 50, 54, 60, 62, 68, 72; 126, 128, 130, 134, 140, 142, 148, 152; 176, 178, 180) formées par des premières sections d'interface réfléchissantes (A, A'), et des régions de méplats (52, 56, 58, 64, 66, 70, 74, 132, 136 à 140, 144, 146, 150, 154; 174) formées par des secondes sections d'interface réfléchissantes (B, B'), dans laquelle la distance entre les premières et les secondes sections d'interface réfléchissantes dans le sens de propagation du faisceau de lecture correspond à un segment de trajet optique d'un quart de longueur d'onde du faisceau de lecture ou d'un multiple impair de celle-ci, et une interface de faisceau de référence (C, C) qui, dans le sens de propagation du faisceau de lecture incident, est aménagée

- soit devant les premières (A) et secondes (B) sections d'interface réfléchissantes, où elle est partiellement réfléchissante, tandis que les premières et secondes sections d'interface sont pleinement réfléchissantes pour le faisceau de lecture,

- soit derrière les premières (A') et secondes (B') sections d'interface réfléchissantes, où elle est pleinement réfléchissante, tandis que les premières et secondes sections d'interface sont partiellement réfléchissantes pour le faisceau de lecture,

dans lequel la structure en créneaux est divisée en cellules de bits canal (16 à 44; 96 à 124; 174 à 180), chacune ayant une région de cratère ou ayant une région de méplat sans cratère,

dans lequel le nombre de cellules de bits canal contenu dans une zone de référence $A_{ref}$ définie par le carré du rapport entre la longueur d'onde WL du faisceau de lecture et l'ouverture numérique NA d'un système optique focalisant le faisceau de lecture

$$A_{ref} = \left(\frac{WL}{NA}\right)^2$$

est compris entre 5 et 20,

et dans lequel le rapport entre la somme des zones de toutes les premières sections d'interface et la somme des zones de toutes les secondes sections d'interface de la structure en créneaux est compris entre 0,4 et 0,6.

**2.** Support de données selon la revendication 1, dans lequel le nombre de cellules de bits canal contenues dans la zone de référence $A_{ref}$ est compris entre 8 et 20.

**3.** Support de données selon la revendication 1, dans lequel le nombre de cellules de bits canal contenues dans la zone de référence $A_{ref}$ est compris entre 14 et 20.

**4.** Support de données selon la revendication 1, dans lequel l'interface (C) du faisceau de référence est partiellement réfléchissante et formée par une interface entre une première couche et une seconde couche, et dans lequel la première couche, telle qu'on l'observe depuis une source de faisceau de lecture, est aménagée devant la seconde couche et a un indice de réfraction supérieur ou inférieur à celui de la seconde couche.

**5.** Support de données selon la revendication 1 ou 4, dans lequel l'interface du faisceau de référence est formée par une couche de revêtement (80).

**6.** Support de données selon la revendication 1, dans lequel les premières sections d'interface réfléchissantes formant les cratères (46, 48, 50, 54, 60, 62, 68, 72 ; 126, 128, 130, 134, 140, 142, 148, 152; 176, 178, 180) de la structure en créneaux, telle qu'on l'observe depuis une source de faisceau de lecture, sont disposées derrière les secondes sections d'interface réfléchissantes formant les régions de méplats (52, 56, 58, 64, 66, 70, 74, 132, 136 à 140, 144, 146, 150, 154; 174).

**7.** Support de données selon la revendication 1, dans lequel les premières sections d'interface réfléchissantes formant les cratères de la structure en créneaux, telle qu'on l'observe depuis une source de faisceau de lecture, sont disposées devant les secondes sections d'interface réfléchissantes formant les régions de méplats.

**8.** Support de données selon la revendication 1, dans lequel les cellules de bits canal (174 à 180) ont la forme d'un hexagone et sont disposées en treillis hexagonal bidimensionnel (172).

**9.** Support de données selon la revendication 1, dans lequel les cellules de bits canal s'alignent le long d'au moins une piste circulaire ou spiralée.

**10.** Support de données selon la revendication 1, qui est adapté pour être lu par un faisceau de lecture focalisé (78) ayant une longueur d'onde de 380 à 410 nm.

**11.** Procédé pour lire des données sur un support de données, comprenant les étapes suivantes :

- on met en oeuvre un support de données (10, 90, 170) selon l'une des revendications précédentes,
- on génère un faisceau de lecture (78) ayant une longueur d'onde prédéterminée,
- on focalise le faisceau de lecture sur le support de données à l'aide d'un système optique ayant une ouverture numérique NA pour former au moins un spot de faisceau de lecture, dans lequel la longueur d'onde et l'ouverture numérique sont choisies de sorte que le nombre de cellules de bits canal du support de données contenues dans une zone de référence $A_{ref}$ définie par le carré du rapport entre la longueur d'onde WL du faisceau de lecture et l'ouverture numérique NA,

$$A_{ref} = \left(\frac{WL}{NA}\right)^2$$

soit compris entre 5 et 20,

- on guide le spot du faisceau de lecture le long des cellules de bits canal du support de données et on détecte, en fonction du temps, une intensité d'un faisceau signal formé par superposition d'un faisceau primaire réfléchi par la cellule de bits canal normalement irradiée par le spot du faisceau de lecture et d'un faisceau de référence formé par réflexion du faisceau de lecture à l'interface du faisceau de référence.

**12.** Procédé selon la revendication 11, dans lequel le faisceau de lecture (78) a une longueur d'onde comprise entre 380 et 410 nm.

**13.** Procédé selon la revendication 11, dans lequel l'ouverture numérique à une valeur comprise entre 0,8 et 2.

FIG.1

FIG.2

- PRIOR ART -

160

162

140 nm

164    166

# FIG.3

170

172

140 nm

174    176  178    180

# FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5591500 A

**Non-patent literature cited in the description**

- **WIM M.J.COENE.** Nonlinear signal-processing model for scalar diffraction optical recording. *Applied Optics,* vol. 42 (32